# EUROPÄISCHE PATENTSCHRIFT

(11) **EP 1 238 614 B1**
(45) Veröffentlichungstag und Bekanntmachung des Hinweises auf die Patenterteilung: **26.10.2005**
(21) Anmeldenummer: 02004610.8
(22) Anmeldetag: 28.02.2002
(51) Int. Cl.: A47J 27/21

(54) **Heizeinsatz für ein elektrisch beheizbares Kochgefäss**
Heating insert for an electrically heated cooking vessel
Cartouche de chauffage pour un récipient de cuisson chauffé électriquement

(30) Priorität: 07.03.2001 DE 10112012
(43) Veröffentlichungstag der Anmeldung: 11.09.2002
(73) Patentinhaber: Eichenauer Heizelemente GmbH & Co.KG, 76870 Kandel (DE)
(72) Erfinder: Kitt, Rudi, 76863 Herxheim-Hayna (DE); Kern, Norbert, 76870 Kandel (DE); Flaxmeyer, Rudi, 76829 Landau (DE); Ohnmacht, Helmut, 76870 Kandel (DE)
(74) Vertreter: Twelmeier, Ulrich

(56) Entgegenhaltungen:
- EP-A- 0 285 839
- EP-A- 0 636 332
- EP-A- 0 870 455
- EP-A- 1 215 939
- DE-A- 4 333 417

## Beschreibung

Die Erfindung geht aus von einem Heizeinsatz mit den im Oberbegriff des Anspruchs 1 angegebenen Merkmalen. Ein solcher Heizeinsatz ist aus der älteren, aber nicht vorveröffentlichten EP 1 215 939 A2 bekannt.

Aus der EP 0 285 839 ist ein elektrisch beheizbares Kochgefäß, insbesondere zum Erhitzen von Trinkwasser, bekannt, welches einen Heizeinsatz mit einem aus rostfreiem Stahl bestehenden Gefäßboden hat, an dessen Unterseite ein elektrischer Heizkörper in Gestalt eines Rohrheizkörpers durch Löten befestigt ist. Der Heizeinsatz ist in einen aus Kunststoff bestehenden Behälter eingesetzt. Solche Heizgefäße müssen mit einem Trockengehschutz ausgestattet sein, welcher sicherstellt, daß der Heizkörper nicht überhitzt und der Kunststoffbehälter nicht beschädigt wird, wenn sich zu wenig oder gar keine Flüssigkeit im Kochgefäß befindet. Zu diesem Zweck offenbart die EP 0 285 839 A2 einen profilierten Gefäßboden mit einer Senke in der Mitte und mit einer Senke am äußeren Rand, welcher mit dem Kunststoffgefäß verbunden ist. Der Heizkörper erstreckt sich in den demgegenüber höher liegenden Bereich des Gefäßbodens und an der höchsten Stelle des Gefäßbodens ist an dessen Unterseite in unmittelbarer Nachbarschaft des Heizkörpers ein Temperaturschalter oder wenigstens der Temperaturfühler eines Temperaturschalters angeordnet. Dadurch soll erreicht werden, daß bei abnehmendem Wasserstand der Bodenbereich, in welchem der Temperaturfühler angeordnet ist, als erstes wasserfrei wird, sich erhitzt und dadurch die Abschaltung des Heizkörpers auslöst, bevor das Wasser völlig verdampft ist und das Kochgefäß Schaden nimmt. Es hat sich jedoch gezeigt, daß ein solches Kochgefäß nicht sicher genug ist, insbesondere in den nicht auszuschließenden Fällen, daß das Kochgefäß schräg steht oder in trockenem Zustand eingeschaltet wird. Dann kann es durch übermäßige Erhitzung zu einer Beschädigung des Heizkörpers und/oder zu einer Verkürzung seiner Lebensdauer und zu einer Beschädigung des Kunststoffgefäßes kommen.

Aus der DE 43 33 417 A1 ist ein elektrisch beheizbares Kochgefäß bekannt, bei welchem ein Innengefäß aus rostbeständigem Chrom-Nickel-Stahl an seiner Unterseite mit einer Wärmeverteilschicht aus Kupfer einer Dicke von 0,01 mm bis 0,5 mm bedeckt ist. Die Wärmeverteilschicht erstreckt sich im Bereich einer Heizspirale und ist zusammen mit dieser auf die Unterseite des Innengefäßes gelötet.

Aus der DE 91 02 908 U1 ist ein elektrisch beheizbares Wassergefäß bekannt, welches einen Heizeinsatz mit einem aus nicht rostendem Stahl bestehenden Gefäßboden hat, welcher unter Ausbildung einer schwachen Erhebung in der Mitte profiliert ist und an seiner tiefsten Stelle an seiner Unterseite mit einem Rohrheizkörper verlötet ist. Vom Rohrheizkörper führt eine aus Aluminium bestehende Wärmebrücke zu einer thermischen Sicherung, welche den Rohrheizkörper abschaltet, wenn dieser zu heiß wird. Durch die Gestalt des Gefäßbodens soll sichergestellt werden, daß der Bereich des Gefäßbodens, unter welchem sich der Rohrheizkörper befindet, nicht oberhalb der Wasseroberfläche liegen kann, und daß eine übermäßige Erwärmung des Rohrheizkörpers mittels der Wärmebrücke, welche die Wärme besser leitet als der Gefäßboden, rasch an eine Temperatursicherung übertragen wird. Die Temperatursicherung und ein Temperaturregler, welche dem Heizeinsatz zugeordnet sind, sind mit der Unterseite des Gefäßbodens verschraubt. Zu diesem Zweck ist an der Mitte des Gefäßbodens ein Gewindebolzen angeschweißt, der die Wärmebrücke durchgreift. Nachteilig dabei ist, daß die Stelle, an welcher der Gewindebolzen angeschweißt ist, auf der Oberseite des Gefäßbodens sichtbar ist. Das ist unerwünscht, weil es das gute Aussehen des Gefäßbodens beeinträchtigt.

Ein weiterer Nachteil des aus der DE 91 02 908 U1 bekannten Heizeinsatzes liegt darin, daß er bei größeren Heizleistungen, wie sie für Wasserkocher erwünscht sind, zu Verformungen des dünnen Gefäßbodens neigt. Dem könnte man zwar durch eine stärkere Profilierung und/oder durch eine größere Dicke des Gefäßbodens begegnen. Eine stärkere Profilierung ist aber wegen des Aussehens und der schlechten Reinigungsmöglichkeit unerwünscht. Eine größere Dikke des Gefäßbodens ist aber unerwünscht, weil sie die thermische Trägheit und den Wärmewiderstand des Gefäßbodens erhöht.

Aus der EP 0 636 332 B1 ist ein Heizeinsatz für einen elektrischen Wasserkocher bekannt, der einen Gefäßboden aus mit PTFE beschichtetem Stahl oder aus nicht oxidierbarem Stahl aufweist. Mit Ausnahme eines hochgezogenen Randbereiches des Gefäßbodens, welcher die Verbindung mit einem Kunststoffgefäß herstellt, ist der Gefäßboden eben ausgebildet und in seinem ebenen Bereich mit einer thermischen Diffusionsplatte verlötet, welche aus einem Metall wie Aluminium oder Kupfer besteht, welches die Wärme wesentlich besser leitet als Stahl. Diese Diffusionsplatte hat eine Dicke in der Größenordnung von 2,5 mm bis 3 mm, wohingegen der Gefäßboden aus Stahl eine Dicke in der Größenordnung von 0,3 mm bis 1 mm hat. Die thermische Diffusionsplatte trägt einen Rohrheizkörper und einen Temperaturbegrenzer. Sie soll die durch den Rohrheizkörper erzeugte Wärme auf die gesamte Oberfläche des Gefäßbodens aus Stahl übertragen und gleichmäßig verteilen und bildet dazu die thermische Schnittstelle zwischen dem Rohrheizkörper und dem Gefäßboden. Die Dicke der thermischen Diffusionsplatte wird in der Größenordnung von 2,5 mm bis 3 mm gewählt, um zwei gegensätzlichen Forderungen zu genügen, nämlich einerseits die erzeugte Wärme schnell verteilen zu können und andererseits die thermische Trägheit des Heizeinsatzes zu begrenzen; denn wenn man die Dicke der thermischen Diffusionsplatte erhöht, erhöht man zugleich die Trägheit der Heizeinrichtung mit der Folge, daß der Temperaturbegrenzer zu langsam auf eine Temperaturerhöhung des Rohrheizkörpers reagiert; verringert man jedoch die Dicke der thermischen Diffusionsplatte, wird die vom Rohrheizkörper erzeugte Wärme nicht mehr so rasch über den Gefäßboden verteilt. Auf der relativ dicken thermischen Diffusionsplatte kann man einen Temperaturbegrenzer oder Temperaturregler durch Schrauben befestigen, ohne daß die Befestigungspunkte auf der Oberseite des Gefäßbodens sichtbar werden. Nachteilig sind dabei der Einsatz einer großen Menge eines teuren Metalls für die Diffusionsplatte und die damit verbundene thermische Trägheit des Heizeinsatzes, welche Überhitzungen des Rohrheizkörpers ermöglicht, die dessen Lebensdauer herabsetzen. Die mit der Trägheit verknüpfte hohe Wärmekapazität des Heizeinsatzes führt dazu, daß der Temperaturbegrenzer erst anspricht, wenn der Heizeinsatz bereits eine große Wärmemenge aufgenommen hat. Bei einem leeren Wasserkocher kann diese Wärmemenge nur an die Luft und an den Kunststoffbehälter abgegeben werden, so daß dieser trotz des vorhandenen Temperaturbegrenzers die Verwendung teuren temperaturbeständigen Plastikmaterials erfordert, um vor Schäden sicher zu sein. Die von der hohen Wärmekapazität des Heizeinsatzes ausgehende Gefährdung wird beim Gebrauch des Wasserkochers noch dadurch verstärkt, daß zunehmende Kalkablagerungen auf dem Gefäßboden die Wärmeabgabe nach oben hin zur zu erwärmenden Flüssigkeit behindern und eine Erhöhung der Temperatur des Rohrheizkörpers bewirken. Damit geht eine verstärkte Wärmeabstrahlung des Rohrheizkörpers einher, welche den Kunststoff des Gefäßes belastet und die Verwendung von teuren Kunststoffen erfordert, die eine hinreichend hohe Temperaturbeständigkeit aufweisen.

Aus der EP 0 870 455 A2 ist es bereits bekannt, bei einem Heizeinsatz für einen Wasserkocher, der ein Kunststoffgefäß hat, an der Unterseite des aus Stahl bestehenden Gefäßbodens eine Wärmeverteilerplatte aus Aluminium vorzusehen, welche nur noch ungefähr 1,5 mm dick ist. Mit dieser kann ein Temperaturbegrenzer oder -regler aber nur deshalb noch verschraubt werden, weil an der Unterseite der Wärmeverteilerplatte nach unten vorspringende Dome jeweils mit einer zentralen Bohrung ausgebildet sind, in welche jeweils eine selbstschneidende Schraube eingedreht werden kann, um den Temperaturbegrenzer oder -regler zu befestigen. Dadurch konnte zwar verglichen mit der EP 0 636 332 B1 die thermische Trägheit des Heizeinsatzes etwas verringert werden, ohne jedoch eine durchgreifende Behebung der Nachteile des aus der EP 0 636 332 B1 bekannten Wasserkochers zu erreichen.

Der vorliegenden Erfindung liegt die **Aufgabe** zugrunde, für einen Heizeinsatz für elektrisch beheizbare Kochgefäße hinsichtlich der einander teilweise widersprechenden Forderungen nach
- einem korrosionsbeständigem Gefäßboden
- einem an der Unterseite des Gefäßbodens angebrachtem Heizkörper
- einer geringen thermischen Trägheit des Heizeinsatzes
- einer hohen Formbeständigkeit bei möglichst ebenem Gefäßboden
- von oben unsichtbaren Befestigungspunkten für einen Temperaturbegrenzer oder -regler und nach
- einem raschen Ansprechen des Temperaturbegrenzers oder -reglers auf ungewollte Temperaturerhöhungen des Heizkörpers
einen optimalen Kompromiß zu finden.

Diese Aufgabe wird gelöst durch einen Heizeinsatz mit den im Anspruch 1 angegebenen Merkmalen. Vorteilhafte Weiterbildungen der Erfindung sind Gegenstand der Unteransprüche.

Der Gefäßboden eines erfindungsgemäßen Heizeinsatzes besteht zumeist aus einem gegen Leitungswasser korrosionsbeständigen ersten Metall, insbesondere aus einem Edelstahl, welcher verglichen mit Metallen wie Aluminium und Kupfer ein schlechter Wärmeleiter ist. Unter einem Metall im Sinne der Anmeldung wird auch eine Legierung verstanden.

Bei dem erfindungsgemäßen Heizeinsatz ist der Gefäßboden an seiner Unterseite mit einem Blech aus einem zweiten Metall versehen, welches im Mittel nur noch 0,5 mm bis 1,2 mm dick ist. Das hat wesentliche Vorteile:
◆ Verglichen mit den aus der EP 0 636 332 B1 und der EP 0 870 455 A2 bekannten Heizeinsätzen sind die Wärmekapazität und thermische Trägheit des erfindungsgemäßen Heizeinsatzes wesentlich verringert.
◆ Durch die Verringerung der Menge des einzusetzenden, die Wärme gut leitenden Metalls wie Aluminium oder Kupfer als Material für das Blech lassen sich die Kosten für die Herstellung des Heizeinsatzes gegenüber der EP 0 870 455 A2 um circa 10% bis 30% senken.
◆ Zur mechanischen Stabilisierung des Gefäßbodens aus einem ersten Metall, welcher eine verhältnismäßig schlechte Wärmeleitfähigkeit hat und deshalb möglichst dünn zu halten ist, vorzugsweise nicht dicker als 0,5 mm, noch besser nicht dicker als 0,4 mm, hat sich ein Blech von 0,5 mm bis 1,2 mm Dicke als völlig ausreichend herausgestellt.
◆ Das Blech, welches erfindungsgemäß nur noch 0,5 mm bis 1,2 mm dick ist, kann die vom Heizkörper erzeugte Wärme zwar nicht mehr wie eine Wärmeverteilerplatte gemäß der EP 0 870 455 A2 oder wie eine thermische Diffusionsplatte gemäß der EP 0 636 332 B1 schnell und gleichmäßig über den gesamten Boden des Heizeinsatzes verteilen. Das ist aber nur scheinbar ein Nachteil. Tatsächlich erweist sich die Abkehr von der Lehre der EP 0 636 332 A1 und der EP 0 870 455 A2 als vorteilhaft, denn:
◆ Infolge des höheren Wärmewiderstandes des Blechs in Richtung parallel zum Gefäßboden und des geringeren Wärmewiderstandes von unten nach oben durch den Gefäßboden hindurch wird die vom Heizkörper erzeugte Wärme auf kürzestem Wege in die zu erwärmende Flüssigkeit, insbesondere Wasser, geleitet und kann dort durch Konvektion abgeführt werden.
◆ Durch den konzentrierteren Wärmefluß durch den Gefäßboden hindurch unmittelbar oberhalb des Heizkörpers platzen unvermeidliche Kalkablagerungen von der Oberseite des Gefäßbodens wieder ab, da die spezifische Heizleistung pro Fläche zunimmt. Auf lange Sicht bleibt die Kalkschicht auf dem Gefäßboden dünner als im Falle eines Heizeinsatzes gemäß der EP 0 870 455 A2 oder gar der EP 0 636 332 B1, bei welchen eine konstante Temperaturverteilung über den Gefäßboden angestrebt wird. Infolge der dünneren Kalkschicht besteht zwischen dem Heizkörper und dem zu beheizenden Medium im Kochgefäß ein geringerer Wärmewiderstand, der eine höhere Lebensdauer des Heizkörpers zur Folge hat, da dieser nicht mehr so heiß wird.
◆ Anstatt eine höhere Lebensdauer anzustreben kann aber auch bei gleichbleibender Lebensdauer die spezifische Leistung des Heizkörpers erhöht werden, was schnellere Aufheizzeiten und eine weitere Reduzierung der abgelagerten Kalkschicht durch frühzeitigeres Abplatzen der Kalkschicht zur Folge hat.
◆ Dünnere Kalkschichten bedeuten aber nicht nur einen geringeren Wärmewiderstand, sondern auch eine geringere zu beheizende Masse und dadurch erneut ein schnelleres Aufheizen.
◆ Wird der Heizkörper durch den geringeren Wärmewiderstand zwischen Heizkörper und zu beheizendem Medium nicht mehr so heiß, gibt er auch nicht mehr so viel Strahlung an das Gehäuse des Kochgefäßes ab, so daß für dieses ein billigerer Kunststoff mit niedrigerer Temperaturbeständigkeit eingesetzt werden kann.
◆ Werkzeuge, welche für die Fertigung von Heizeinsätzen mit verhältnismäßig dicker Wärmeverteilerplatte an der Unterseite des Gefäßbodens hergestellt wurden, können für das Herstellen erfindungsgemäßer Heizeinsätze weitgehend beibehalten werden. Entsprechendes gilt für die zur Anwendung kommende Verbindungstechnik.
◆ Es hat sich gezeigt, daß das anstelle einer dickeren Wärmeverteilerplatte erfindungsgemäß zur Anwendung kommende dünne Blech, welches vorzugsweise aus Aluminium oder Kupfer besteht, noch eine hinreichende Wärmekapazität aufweist, um Schockschäden zu verhindern, die auftreten können, wenn in ein überhitztes Kochgefäß plötzlich eine kalte Flüssigkeit eingefüllt wird.
◆ Ein Blech mit der erfindungsgemäß vorgesehenen Dicke von nur noch 0,5 mm bis 1,2 mm ist ausreichend, um daran einen Temperaturbegrenzer oder -regler anzubringen. Zwar mögen sich die Befestigungspunkte für den Temperaturbegrenzer oder -regler an dem dünnen Blech abzeichnen, sie zeichnen sich aber nicht an der Oberseite des Gefäßbodens ab, mit welchem das dünne Blech flächig verbunden ist.
◆ Das erfindungsgemäß vorgesehene dünne Blech kann darüberhinaus mit Vorteil verwendet werden, um den Temperaturbegrenzer oder -regler oder wenigstens dessen Temperaturfühler thermisch an den Heizkörper anzukoppeln: Weil das dünne Blech eine geringere Wärmekapazität hat als die aus der EP 0 870 455 A2 bekannte Wärmeverteilerplatte und als die aus der EP 0 636 332 B1 bekannte thermische Diffusionsplatte, pflanzt sich eine Temperaturerhöhung des Heizkörpers über das dünne Blech rascher zum Temperaturbegrenzer oder zu dessen Temperaturfühler fort. Die Wärmemenge, die dabei parallel zum Gefäßboden durch das Blech fließt, ist zwar klein verglichen mit der Wärmemenge, welche quer durch den Gefäßboden fließt, entscheidend ist aber, daß sie die Temperaturerhöhung des Heizkörpers dem Temperaturbegrenzer bzw. dessen Temperaturfühler rasch mitteilt. So kommt es bei einer Überhitzung des Heizkörpers schneller zum Abschalten des Heizkörpers. Das ist ein Gewinn an Sicherheit.
◆ Der Verzicht der Erfindung darauf, die vom Heizkörper erzeugte Wärme gleichmäßig über den Gefäßboden zu verteilen, führt mithin zu entscheidenden Vorteilen.

Die Vorteile treten in erheblichem Umfang erst bei einer Dicke des Blechs von nicht mehr als 1,2 mm auf. Vorzugsweise ist das Blech nicht mehr als 1 mm dick, noch besser nicht mehr als 0,8 mm, was als das Optimum erscheint. Bei einer Blechdicke von weniger als 0,5 mm ist der Beitrag des Blechs zur Formstabilität des Gefäßbodens zu klein und es wird zu aufwendig oder gar unmöglich, das Blech noch zur Befestigung des Temperaturbegrenzers oder -reglers zu verwenden.

Der Gefäßboden besteht zweckmäßigerweise aus Stahl mit einer für den vorgesehenen Einsatzzweck - Verwendung in Küchen, insbesondere zum Wasserkochen - hinreichenden Korrosionsbeständigkeit. Der Gefäßboden kann auch beschichtet sein, z.B. mit PTFE oder einer anderen für Lebensmittel geeigneten Beschichtung, insbesondere einer solchen, an welcher Fremdsubstanzen schlecht haften.

Für das Blech eignen sich wegen ihrer hohen Wärmeleitfähigkeit vor allem-Aluminium und Kupfer und Legierungen dieser Metalle, welche darüberhinaus den Vorteil haben, sich leicht bearbeiten, tiefziehen, löten und gegebenenfalls auch kleben zu lassen. Zweckmäßigerweise wird das Blech mit der Unterseite des Gefäßbodens verlötet. Grundsätzlich ist es aber auch möglich, einen Leitkleber einzusetzen, wenn dieser eine für den konkreten Verwendungszweck des Heizeinsatzes hinreichende Wärmeleitfähigkeit und Temperaturbeständigkeit aufweist. Die gewünschte Wärmeleitfähigkeit des Leitklebers erhält man durch metallische Pigmente im Klebstoff.

Vorzugsweise erstreckt sich das Blech nicht bis zum Rand des Gefäßbodens und hat deshalb keine Verbindung zu den Kunststoffteilen des Kochgefäßes. Das vereinfacht die Ausbildung des Bleches, so daß dieses eben ausgebildet sein kann. Die gewünschte formstabilisierende Wirkung des Blechs wird am Rand des Gefäßbodens nicht benötigt, weil dort die Gefäßwand eine stabilisierende Wirkung ausübt.

Vorzugsweise weist das Blech in der Mitte des Gefäßbodens ein Loch auf. Dadurch können mechanische Spannungen, welche aufgrund der unterschiedlichen thermischen Ausdehnungskoeffizienten des Blechs und des Gefäßbodens entstehen, relaxieren und eine thermisch bedingte Verformung des Gefäßbodens und ein eventuelles Ablösen des Blechs vom Gefäßboden verhindert werden. Ein weiterer Vorteil des Loches ist, daß überschüssiges Lot und Flußmittel beim Verlöten des Blechs mit dem Gefäßboden in das Loch eintreten können und daß die Entlüftung der Lotschicht beim Lötvorgang erleichtert ist. Außerdem ist in dem Loch eine Sichtprüfung des Lotflusses möglich. Aus Symmetriegründen ist das Loch zweckmäßigerweise kreisrund.

Der Heizkörper ist vorzugsweise an der Unterseite des Blechs befestigt. Das ermöglicht eine einfache thermische Ankopplung eines Temperaturbegrenzers über das Blech an den Heizkörper und ist für die Montage des Blechs und des Heizkörpers an der Unterseite des Gefäßbodens besonders günstig. Die Wärme, die der Heizkörper erzeugt, wird im wesentlichen durch das dünne Blech, welches einen nur geringen Wärmewiderstand hat, auf kürzestem Wege in den Gefäßboden und durch diesen in das zu erhitzende Medium eingeleitet. Nur ein geringer Teil der Wärme fließt parallel zum Gefäßboden durch das Blech und gelangt auf diese Weise rasch zum Temperaturbegrenzer oder -regler, wozu das Blech vorzugsweise auch die Mittel zum Anbringen des Temperaturbegrenzers oder -reglers aufweist.

Es ist aber auch möglich, den Heizkörper, welcher vorzugsweise ein Rohrheizkörper ist, unmittelbar mit dem Gefäßboden zu verlöten und das dünne Blech in einem gewissen Abstand zum Heizkörper in dem von ihm umgrenzten Raum anzuordnen. Ein in dieser Weise vom Heizkörper entkoppeltes dünnes Blech ist sehr wohl geeignet, die Form des Gefäßbodens zu stabilisieren und zur Montage eines Temperaturbegrenzers oder -reglers zu dienen. Die erwünschte thermische Ankopplung des Temperaturbegrenzers oder -reglers an den Heizkörper kann in diesem Falle durch eine gesonderte Wärmebrücke erfolgen, z.B. durch ein oder zwei weitere Bleche, welche einesteils dem Heizkörper an- oder aufliegen und andernteils mit dem Temperaturbegrenzer oder mit dessen Temperaturfühler Verbindung haben. Das weitere Blech kann in entsprechender Weise wie das erste Blech an der Unterseite des Gefäßbodens befestigt sein, so daß die beiden Bleche dort nebeneinander liegen. Vorzugsweise berühren sie sich dabei nicht oder allenfalls über einen oder mehrere Stege, deren Breite - gegebenenfalls an ihren schmalsten Stellen - zusammengenommen klein ist gegen den Umfang des betreffenden weiteren Blechs, welches den Temperaturbegrenzer oder -regler thermisch an den Heizkörper koppelt. Das hat den Vorteil, daß das weitere Blech nur eine minimale Wärmekapazität hat; außerdem ist der Wärmefluß vom jeweiligen weiteren Blech in das erste Blech, auf welchem der Temperaturbegrenzer mechanisch befestigt sein kann, stark behindert, wodurch im Falle einer Überhitzung des Heizkörpers eine äußerst kurze Ansprechzeit des Temperaturbegrenzers erzielt wird.

Mit einem so dünnen Blech, wie es erfindungsgemäß vorgesehen ist, läßt sich ein Temperaturbegrenzer oder -regler nicht mehr verschrauben. Auch Dome mit einer Schraubbohrung, wie sie die EP 0 870 455 A2 offenbart, lassen sich mit einem so dünnen Blech nicht mehr bilden. Statt dessen hat der erfindungsgemäße Heizeinsatz als Mittel zum Anbringen des Temperaturbegrenzers oder -reglers an dem Blech mehrere nach unten vorstehende Stifte, insbesondere Hohlstifte, welche durch Tiefziehen des Blechs gebildet werde, bevor dieses mit der Unterseite des Gefäßbodens verbunden wird. Die Stifte bzw. Hohlstifte sind geeignet, einen Temperaturbegrenzer oder -regler mit der Unterseite des Heizeinsatzes zu vernieten.

Um genügend Material für das Bilden von Stiften durch Umformen des Blechs zu erhalten, wird zweckmäßigerweise so vorgegangen, daß die Dicke des Blechs in einem Bereich, der die Stifte unmittelbar umgibt, gegenüber der Dicke des restlichen Blechs beim Umformen vermindert wird. Das ist ohne Verlust an stabilisierender Wirkung für den Gefäßboden möglich. Zum Stabilisieren der Stifte selbst ist es bevorzugt, das Blech in den Bereich mit verminderter Dicke mit radial in Bezug auf den jeweiligen Stift verlaufenden Rippen zu versehen.

Der elektrische Heizkörper ist vorzugsweise ein Rohrheizkörper. Dessen Verwendung ist preiswert und erprobt. Er kann durch Umformen abgeflacht und mit seiner abgeflachten Seite mit der Unterseite des Gefäßbodens oder des Blechs verlötet werden und infolge der Abflachung seine Wärme besser in den Gefäßboden hinein und durch ihn hindurch leiten. Zweckmäßigerweise ist der Heizkörper vom Rand des Gefäßbodens beabstandet, um die Wärmebelastung des Kunststoffgehäuses des Kochgefäßes zu begrenzen.

Weitere Einzelheiten und Vorteile der Erfindung werden anhand von zwei Ausführungsbeispielen unter Bezugnahme auf die beiliegenden Zeichnungen erläutert. Es zeigen:
- Figur 1: eine Draufsicht auf die Unterseite eines erfindungsgemäßen Heizeinsatzes,
- Figur 2: einen Querschnitt durch den in Figur 1 gezeigten Heizeinsatz entlang der Linie aa,
- Figur 3: eine Draufsicht auf die Unterseite eines weiteren Ausführungsbeispiels eines erfindungsgemäßen Heizeinsatzes,
- Figur 4: einen Querschnitt entlang der Linie bb durch den in Figur 3 gezeigten Heizeinsatz, und
- Figur 5: ausschnittsweise einen Querschnitt durch einen Wasserkocher mit Heizeinsatz.

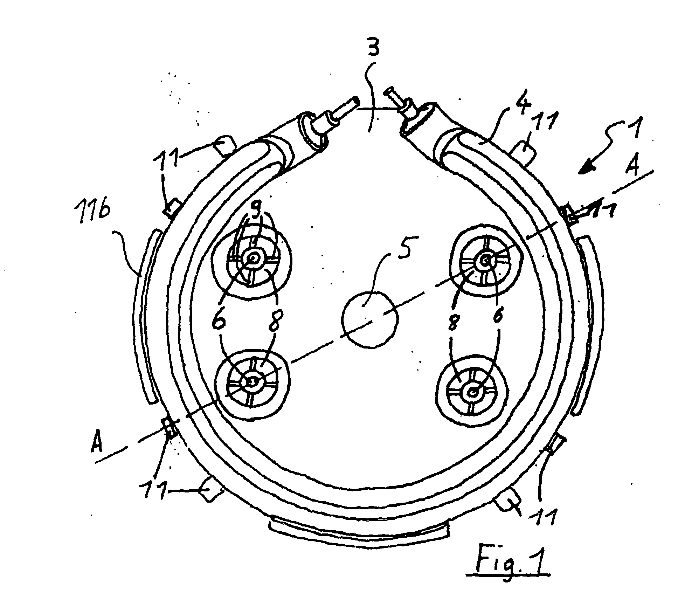

Figur 1 zeigt in einer Draufsicht die Unterseite eines Heizeinsatzes 1 für einen elektrischen Wasserkocher. Der Heizeinsatz 1 verfügt über einen 0,4 mm dicken Gefäßboden 2 aus Edelstahl, an dessen Unterseite ein Blech 3 angebracht ist, welches aus einer Aluminiumlegierung besteht und - abgesehen von den nachstehend erläuterten Bereichen 8, welche etwas dünner ausgeführt sind- 0,8 mm dick ist. Dieses Blech 3 ist mit dem Gefäßboden 2 verlötet. Dieses Blech 3 dient zur Befestigung eines - nicht gezeigten - Temperaturbegrenzers oder -reglers. Zu diesem Zweck weist das Blech 3 mehrere nach unten vorstehende Hohlstifte 6 auf, welche durch Tiefziehen ausgebildet sind. Der Temperaturbegrenzer oder -regler wird auf dem Blech 3 befestigt, indem er mittels entsprechender Öffnungen auf die Stifte 6 gesteckt wird und die Stifte 6 anschließend plattgepreßt werden. Um trotz der geringen Dicke des Blechs 3 diese Stifte 6 zur Befestigung des Temperaturbegrenzers oder -reglers ausbilden zu können, ist die Dicke des Blechs 3 in einem Bereich 8, der die Stifte 6 unmittelbar umgibt gegenüber der Dicke des restlichen Blechs 3 vermindert. In diesem Bereich 8 verminderter Dicke weist das Blech Rippen 9 auf, welche radial in Bezug auf den jeweiligen Stift 6 verlaufen und dazu dienen trotz der verminderten Dicke dieses Bereichs 8, eine für die Befestigung des Temperaturbegrenzers oder -reglers ausreichende mechanische Belastbarkeit zu gewährleisten. Selbstverständlich ist es auch denkbar, insbesondere bei noch dünner ausgebildeten Blechen 3, die Stifte oder auch Gewindebolzen 6 gesondert am Blech 3 zu befestigen.

Neben der Befestigung des Temperaturbegrenzers oder -reglers dient das Blech 3 zugleich auch der thermischen Ankopplung des Temperaturbegrenzers oder -reglers an den mit dem Blech 3 verlöteten Heizkörper 4, indem es eine Auflagefläche für Bimetallscheiben des Temperaturbegrenzers oder -reglers bietet. Die aufgrund der geringen Dicke des Blechs 3 niedrige Wärmekapazität ist hierfür von Vorteil, da so aufgrund der guten Wärmeleitfähigkeit des Blechs 3 - insbesondere bei einem leeren Kochgefäß - die Bimetallscheiben rasch auf ihre Schalttemperatur erwärmt werden, ohne daß hierfür ein nennenswerter Wärmefluß erforderlich wäre.

Das Blech 3 weist in der Mitte des Gefäßbodens 2 ein kreisrundes Loch 5 auf. Dieses Loch 5 dient zum einen der Relaxation von Spannungen, welche bei Erwärmung aufgrund der unterschiedlichen thermischen Ausdehnungskoeffizienten des aus Edelstahl bestehenden Bodens 2 und dem aus einer Aluminiumlegierung bestehenden Blech 3 entstehen. Außerdem kann durch dieses Loch 5 Fluß- oder Lötmittel beim Verlöten in Form von Dampf entweichen und die Lötqualität optisch überprüft werden.

Aus dem Blech 3 sind Laschen11 ausgebildet, welche zur Fixierung und Positionierung des Rohrheizkörpers 4 auf dem Blech 3 dienen. Laschen 11b am Rand des Blechs 3 dienen zur Positionierung auf dem Gefäßboden 2.

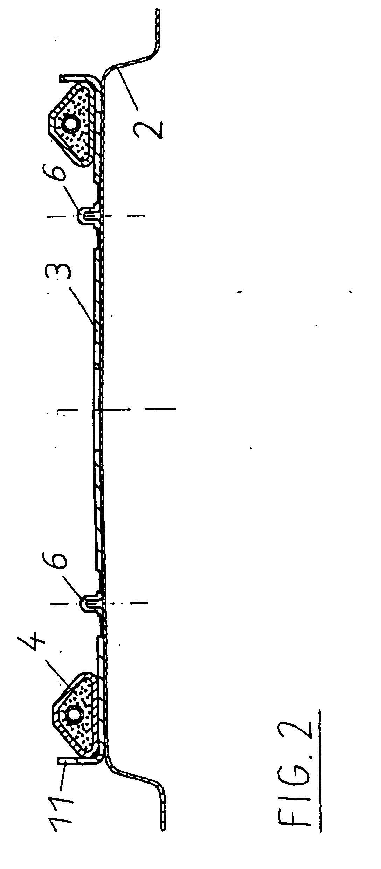

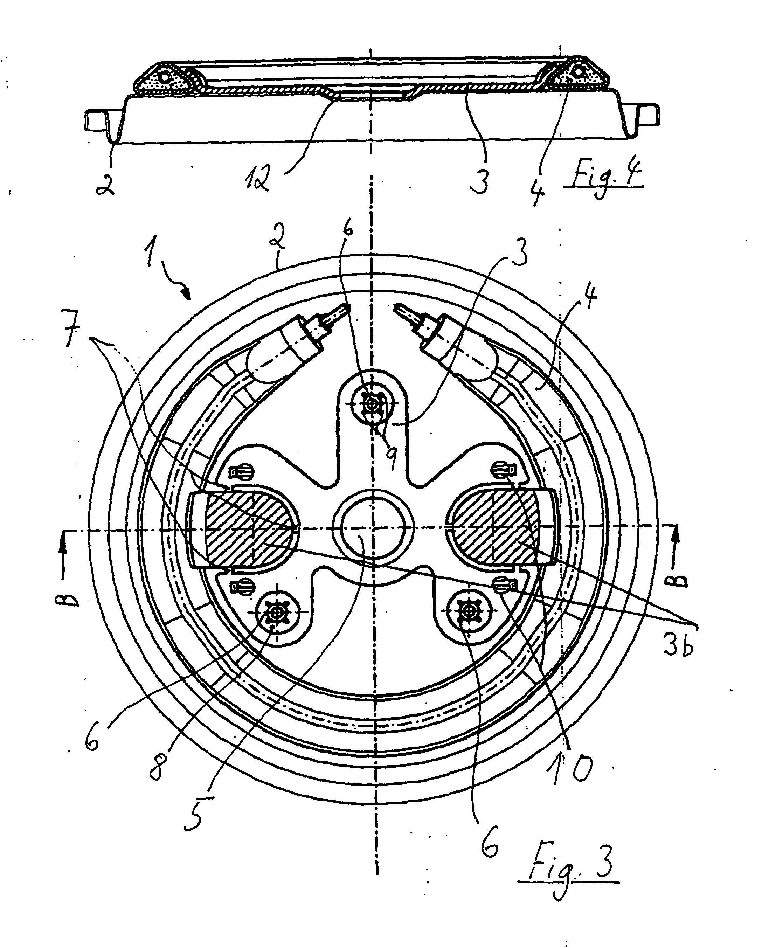

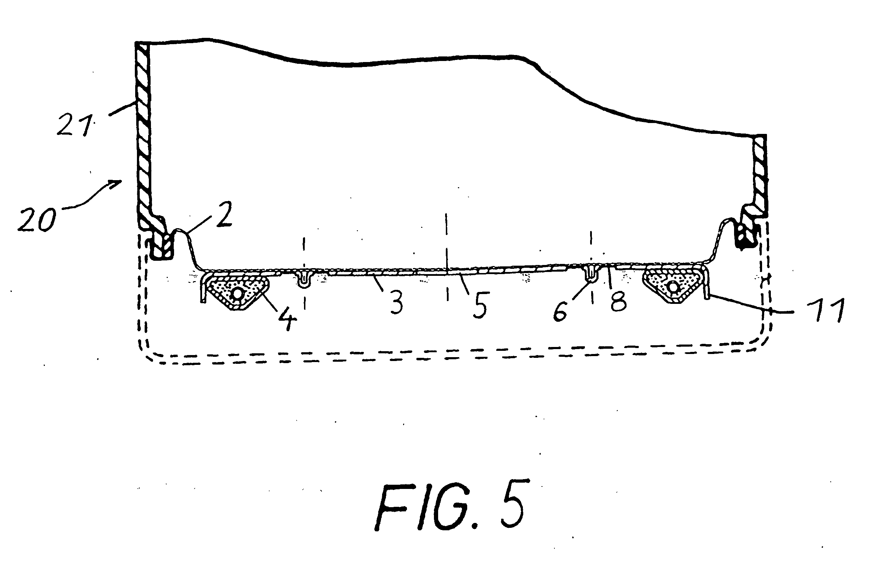

Figur 2 zeigt einen Querschnitt entlang der Linie durch den in Figur 1 gezeigten Heizeinsatz 1. Wie man sieht, ist der Heizkörper 4 einseitig abgeflächt, so daß eine größere Kontaktfläche mit dem Blech 3 - oder wie bei der in Figur 3 und 4 gezeigten zweiten Ausführungsform mit dem Gefäßboden 2 - besteht. Vorteilhaft wird so eine bessere Wärmeankopplung an den Gefäßboden 2 und damit das zu erwärmende Wasser erreicht und die Belastbarkeit der Lötverbindung verbessert, so daß ein Abplatzen des Heizkörpers 4 durch thermische Spannungen verhindert ist. Der Gefäßboden 2 ist auf der mit Wasser in Kontakt tretenden Oberseite mit PTFE beschichtet, so daß Fremdsubstanzen daran schlecht haften und die Reinigung erleichtert ist. Selbstverständlich sind auch andere Beschichtungen denkbar und der Gefäßboden 2 kann auch ohne Beschichtung ausgeführt sein.

Figur 3 zeigt ein weiteres Ausführungsbeispiel eines Heizeinsatzes 1. Im Unterschied zu dem voranstehend beschriebenen Ausführungsbeispiel ist der Rohrheizkörper 4 hier direkt auf dem Gefäßboden 2 durch Verlöten befestigt. Das Blech 3 bedeckt bei diesem Ausführungsbeispiel auch nur noch einen so kleinen Teil der Fläche des Gefäßbodens 2, wie zur Befestigung des Temperaturbegrenzers erforderlich ist, was den Vorteil einer erheblichen Materialersparnis mit sich bringt.

Der - nicht gezeigte - Temperaturbegrenzer oder -regler verfügt typischerweise über zwei Bimetallscheiben mit einer vorgegebenen Schalttemperatur. Wie beim vorhergehenden Ausführungsbeispiel ist das Blech 3 das Mittel zum thermischen Ankoppeln des Temperaturbegrenzers an den Heizkörper 4. Im Unterschied zu dem in den Figuren 1 und 2 gezeigten Ausführungsbeispiel sind diese aber nicht integral ausgeführt, sondern der in Figur 3 gezeigte Heizeinsatz 1 weist zu diesem Zweck weitere Bleche 3b auf, welche mit dem ersten Blechs 3 durch schmale Stege 7 verbunden sind. Diese weiteren Bleche 3b sind mit dem Heizkörper 4 verlötet und dienen zur Auflage der Bimetallscheiben des Temperaturbegrenzers. Die Gesamtbreite der Stege 7 ist klein gegen den Umfang der weiteren Bleche 3b, so daß nur eine vernachlässigbar geringe Wärmemenge über diese Stege 7 von den weiteren Blechen 3b auf das Blech 3 abfließt; vielmehr erfolgt der Hauptwärmeabfluß von diesen weiteren Blechen 3b über den Gefäßboden 2. Im Falle einer Überhitzung des Heizkörpers 4 ergibt sich so eine außerordentlich kurze Ansprechzeit des Temperaturbegrenzers.

Figur 4 zeigt diesen Heizeinsatz 1 im Querschnitt. Der Gefäßboden 2 weist bei diesem Ausführungsbeispiel eine Krempe auf, welche die Verankerung des Gefäßbodens in der aus Plastik bestehenden Gefäßwand des Wasserkochers unterstützt. Der Gefäßboden 2 weist in der Mitte eine kreisförmige Erhöhung 12 auf, welche zusammen mit dem an die Kontur angepaßten Rand des Lochs 5 im Blech 3 einen Formschluß eingeht und so das Positionieren des Blechs 3 bei der Montage auf den Gefäßboden 2 erleichtert. Selbstverständlich ist hierfür auch eine entsprechende Vertiefung oder andere Profilierung der Oberfläche des Gefäßbodens 2 geeignet. Vorteilhaft wird durch die Erhöhung 12 oder eine andere Profilierung der Oberfläche auch die mechanische Stabilität des Gefäßbodens 2 erhöht.

Figur 5 zeigt ausschnittsweise einen Querschnitt durch einen Wasserkocher 20 mit einem Heizeinsatz 1. Der Heizeinsatz 1 ist über eine Krempe des Gefäßbodens 2 in der aus Plastik bestehenden Gefäßwand 21 verankert, wobei selbstverständlich auch andere Verankerungsmöglichkeiten möglich sind. Das Blech 3 erstreckt sich nicht bis zum Rand des Gefäßbodens 2 und ist somit wie auch der Heizkörper 4 von der Gefäßwand 21 beabstandet, wodurch ein Wärmeeintrag vom Heizkörper 4 in die Gefäßwand 21 minimiert wird.

## Patentansprüche

1. Heizeinsatz für ein elektrisch beheizbares Kochgefäß
mit einem Gefäßboden (2) aus einem ersten Metall, welcher an seiner Unterseite mit einem Blech (3b) aus einem zweiten Metall, welches Aluminium, Kupfer oder eine Legierung eines dieser Metalle ist, beschichtet ist, dessen Wärmeleitfähigkeit größer ist als die des ersten Metalls des Gefäßbodens (2), mit einem unter dem Gefäßboden (2) vorgesehenen, den Gefäßboden (2) beheizenden elektrischen Heizkörper (4), welcher als Ruhrhelzkörper ausgebildet ist,
mit Mitteln zum thermischen Ankoppeln eines Temperaturbegrenzers oder -reglers an den Heizkörper (4),
und mit mehreren nach unten vorstehenden Stiften (6) zum Anbringen eines Temperaturbegrenzers oder -reglers an der Unterseite des Blechs (3)
**dadurch gekennzeichnet, daß** das Blech (3) im Mittel nur 0,5 mm bis 1,2 mm dick ist und dass die Stifte (6) durch Umformen des Blechs (3) gebildet sind.

2. Heizeinsatz nach Anspruch 1, **dadurch gekennzeichnet, daß** das Blech (3) im Mittel nicht mehr als 1 mm dick ist.

3. Heizeinsatz nach Anspruch 1, **dadurch gekennzeichnet, daß** das Blech (3) im Mittel nicht mehr als 0,8 mm dick ist.

4. Heizeinsatz nach einem der vorstehenden Ansprüche, **dadurch gekennzeichnet, daß** der Gefäßboden (2) aus einem Stahl besteht.

5. Heizeinsetz nach einem der Ansprüche 1 bis 3, **dadurch gekennzeichnet, daß** der Gefäßboden (2) aus einem auf seiner Oberseite beschichteten Stahl besteht.

6. Heizeinsatz nach einem der vorstehenden Ansprüche, **dadurch gekennzeichnet, daß** der Gefäßboden (2) dort, wo er mit dem Blech (3) beschichtet ist, eben ausgebildet ist.

7. Heizeinsatz nach einem der vorstehenden Ansprüche, **dadurch gekennzeichnet, daß** sich das Blech (3) nicht bis zum Rand des Gefäßbodens (2) erstreckt.

8. Heizeinsatz nach einem der vorstehenden Ansprüche, **dadurch gekennzeichnet, daß** das Blech (3) in der Mitte des Gefäßbodens (2) ein Loch (5) aufweist.

9. Heizeinsatz nach Anspruch 8, **dadurch gekennzeichnet, daß** das Loch (5) kreisrund ist.

10. Heizeinsatz nach einem der vorstehenden Ansprüche, **dadurch gekennzeichnet, daß** der Heizkörper (4) an der Unterseite des Blechs (3) befestigt ist.

11. Heizeinsatz nach einem der vorstehenden Ansprüche, **dadurch gekennzeichnet, daß** das Blech (3) das Mittel zum thermischen Ankoppeln des Temperaturbegrenzers oder -reglers an den Heizkörper (4) ist,

12. Heizeinsatz nach Anspruch 11, **dadurch gekennzeichnet, daß** das Blech (3) die Mittel (6) zum Anbringen des Temperaturbegrenzers oder -reglers aufweist.

13. Heizeinsatz nach einem der vorstehenden Ansprüche, **dadurch gekennzeichnet, daß** an der Unterseite des Gefäßbodens (2) nebeneinander ein erstes Blech (3) mit Mitteln zum Anbringen des Temperaturbegrenzers oder -reglers und wenigstens ein weiteres Blech (3b) zum thermischen Ankoppeln des Temperaturbegrenzers oder -reglers an den Heizkörper (4) vorgesehen sind.

14. Heizeinsatz nach einem der vorstehenden Ansprüche, **dadurch gekennzeichnet, daß** die weiteren Bleche (3b) durch einen oder mehrere Stege (7) mit dem ersten Blech (3) verbunden sind, deren Breite - gegebenenfalls an ihren schmalsten Stellen - für das jeweilige weitere Blech (3b) zusammengenommen klein ist gegen den Umfang des betreffenden weiteren Blechs (3b), welches den Temperaturbegrenzer oder -regler thermisch an den Heizkörper (4) koppelt.

15. Heizeinsatz nach einem der vorstehenden Ansprüche, **dadurch gekennzeichnet, daß** die nach unten vorstehenden Stifte (6) Hohlstifte sind.

16. Heizeinsatz nach Anspruch 15, **dadurch gekennzeichnet, daß** die Stifte (6) durch Tiefziehen des Blechs (3) gebildet sind.

17. Heizeinsatz nach Anspruch 15 oder 16, **dadurch gekennzeichnet, daß** die Dicke des Blechs (3) in einem Bereich (8), der die Stifte (6) unmittelbar umgibt, gegenüber der Dicke des restlichen Blechs (3) vermindert ist.

18. Heizeinsatz nach Anspruch 17, **dadurch gekennzeichnet, daß** das Blech (3) in seinen Bereichen (8) mit verminderter Dicke Rippen (9) aufweist, welche radial in Bezug auf den jeweiligen Stift (6) verlaufen.

19. Heizeinsatz nach einem der vorstehenden Ansprüche, **dadurch gekennzeichnet, daß** aus dem Blech (3) Laschen (11, 11b) ausgebildet sind.

20. Heizeinsatz nach einem der vorstehenden Ansprüche, **dadurch gekennzeichnet, daß** das Blech (3) mit dem Gefäßboden (2) verlötet ist.

21. Heizeinsatz nach einem der Ansprüche 1 bis 19, **dadurch gekennzeichnet, daß** das Blech (3) durch einen hinreichend temperaturbeständigen Leitkleber mit dem Gefäßboden (2) verklebt ist.

22. Heizeinsatz nach einem der vorstehenden Ansprüche, **dadurch gekennzeichnet, daß** der Rohrheizkörper (4) durch Umformen abgeflacht und mit seiner abgeflachten Seite mit der Unterseite des Gefäßbodens (2) oder des Blechs (3) verlötet ist.

23. Heizeinsatz nach einem der vorstehenden Ansprüche, **dadurch gekennzeichnet, daß** der Heizkörper (4) mit Abstand vom Rand des Gefäßbodens (2) angeordnet ist.

24. Heizeinsatz nach einem der vorstehenden Ansprüche, **dadurch gekennzeichnet, daß** der Gefäßboden (2) höchstens 0,5 mm, vorzugsweise höchstens 0,4 mm dick ist.

25. Heizeinsatz nach einem der vorstehenden Ansprüche in Verbindung mit Anspruch 8 oder 9, **dadurch gekennzeichnet, daß** der Gefäßboden (2) In der Mitte eine bevorzugt kreisförmige Erhöhung oder Vertiefung (12) hat, welche zusammen mit dem an die Kontur der Erhöhung oder Vertiefung angepaßten Rand des Lochs (5) in dem Blech (3) einen Formschluß eingeht.

## Claims

1. Heating insert for an electrically heated cooking vessel
having a vessel bottom (2), made from a first metal, which is coated on its lower surface with a metal sheet (3b) made from a second metal, being aluminum, copper or an alloy of one of these metals, having a thermal conductivity higher than that of the first metal of the vessel bottom (2), with an electric heater (4), in the form of a tubular heater, being provided below the vessel bottom (2) for heating the vessel bottom (2),
comprising means for thermally coupling a temperature limiter or temperature controller with the heater (4),
and comprising a plurality of downwardly projecting pins (6) for mounting a temperature limiter or temperature controller on the lower surface of the metal sheet (3),
**characterized in that** the metal sheet (3) has an average thickness as small as 0.5 mm to 1.2 mm and that the pins (6) are formed by reforming of the metal sheet (3).

2. The heating insert as defined in Claim 1, **characterized in that** the metal sheet (3) has an average thickness of not more than 1 mm.

3. The heating insert as defined in Claim 1, **characterized in that** the metal sheet (3) has an average thickness of not more than 0.8 mm.

4. The heating insert as defined in any of the preceding claims, **characterized in that** the vessel bottom (2) consists of steel.

5. The heating insert as defined in any of Claims 1 to 3, **characterized in that** the vessel bottom (2) consists of steel which is coated on its upper surface.

6. The heating insert as defined in any of the preceding claims, **characterized in that** the vessel bottom (2) is made plane in the areas where it is coated with the metal sheet (3).

7. The heating insert as defined in any of the preceding claims, **characterized in that** the metal sheet (3) does not extend up to the edge of the vessel bottom (2).

8. The heating insert as defined in any of the preceding claims, **characterized in that** the metal sheet (3) is provided with a hole (5) at the center of the vessel bottom (2).

9. The heating insert as defined in Claim 8, **characterized in that** the hole (5) is circular in shape.

10. The heating insert as defined in any of the preceding claims, **characterized in that** the heater (4) is fixed on the lower surface of the metal sheet (3).

11. The heating insert as defined in any of the preceding claims, **characterized in that that** the metal sheet (3) is the means for thermally coupling the temperature limiter or the temperature controller with the heater (4).

12. The heating insert as defined in Claim 11, **characterized in that** the metal sheet (3) comprises the means (6) for mounting the temperature limiter or the temperature controller.

13. The heating insert as defined in any of the preceding claims, **characterized in that** there are provided at the lower surface of the vessel bottom (2), one beside the other, a first metal sheet (3) comprising means for mounting the temperature limiter or the temperature controller and at least one further metal sheet (3b) for thermally coupling the temperature limiter or the temperature controller with the heater (4).

14. The heating insert as defined in any of the preceding claims, **characterized in that** the further metal sheets (3b) are connected with the first metal sheet (3) by one or more webs (7), the combined width of such webs of each such further metal sheet (3b) - measured at their narrowest points, if any - being small compared with the circumference of the respective further metal sheet (3b) that couples the temperature limiter or the temperature controller thermally with the heater (4).

15. The heating insert as defined in any of the preceding claims, **characterized in that** the downwardly projecting pins (6) are hollow pins.

16. The heating insert as defined in Claim 15, **characterized in that** the pins (6) are formed by deep-drawing of the metal sheet (3).

17. The heating insert as defined in Claim 15 or Claim 16, **characterized in that** the thickness of the metal sheet (3) is reduced in an area (8) immediately surrounding the pins (6), compared with the thickness of the remaining metal sheet (3).

18. The heating insert as defined in Claim 17, **characterized in that** the metal sheet (3) is provided in its areas (8) of reduced thickness with ribs (9) which extend radially relative to the respective pin (6).

19. The heating insert as defined in any of the preceding claims, **characterized in that** lugs (11, 11b) are formed from the metal sheet (3).

20. The heating insert as defined in any of the preceding claims, **characterized in that** the metal sheet (3) is connected with the vessel bottom (2) by soldering.

21. The heating insert as defined in any of claims 1 to 19, **characterized in that** the metal sheet (3) is glued to the vessel bottom (2) using a sufficiently temperature-resistant conductive adhesive.

22. The heating insert as defined in any of the preceding claims, **characterized in that** the tubular heater (4) is flattened by reforming and that its flattened side is connected with the lower surface of the vessel bottom (2) or of the metal sheet (3) by soldering.

23. The heating insert as defined in any of the preceding claims, **characterized in that** the heater (4) is provided in spaced relation to the margin of the vessel bottom (2).

24. The heating insert as defined in any of the preceding claims, **characterized in that** the vessel bottom (2) has a thickness of maximally 0.5 mm, preferably maximally 0.4 mm.

25. The heating insert as defined in any of the preceding claims in combination with Claim 8 or Claim 9, **characterized in that** the vessel bottom (2) has a preferably circular bump or dip (12) at its center, which fits positively into the edge of the hole (5) in the metal sheet (3) the contour of which is adapted to such bump or dip.

## Revendications

1. Pièce rapportée pour un récipient de cuisson apte à être chauffé par voie électrique, comprenant
une base de récipient (2) constituée d'un premier métal, qui est recouverte, sur son côté inférieur, d'une tôle (3b) constituée d'un deuxième métal, qui représente de l'aluminium, du cuivre ou un alliage d'un de ces métaux, dont la conductibilité thermique est supérieure à celle du premier métal de la base de récipient (2),
un corps de chauffage électrique prévu en dessous de la base de récipient (2); qui chauffe la base de récipient (2) et qui est réalisé sous la forme d'un corps de chauffage tubulaire,
des moyens pour le couplage thermique d'un limiteur ou d'un régulateur de température au corps de chauffage (4), et plusieurs broches (6) faisant saillie vers le bas pour l'application d'un limiteur ou d'un régulateur de température sur le côté inférieur de la tôle (3),
**caractérisée en ce que** la tôle (3) possède une épaisseur moyenne de seulement 0,5 mm à 1,2 mm et **en ce que** les broches (6) sont réalisées par façonnement de la tôle (3).

2. Pièce rapportée de chauffage selon la revendication 1, **caractérisée en ce que** la tôle (3) possède une épaisseur moyenne qui n'est pas supérieure à 1 mm.

3. Pièce rapportée de chauffage selon la revendication 1, **caractérisée en ce que** la tôle (3) possède une épaisseur moyenne qui n'est pas supérieure à 0,8 mm.

4. Pièce rapportée de chauffage selon l'une quelconque des revendications précédentes, **caractérisée en ce que** la base de récipient (2) est constituée d'un acier.

5. Pièce rapportée de chauffage selon l'une quelconque des revendications 1 à 3, **caractérisée en ce que** la base de récipient (2) est constituée d'un acier recouvert sur son côté supérieur.

6. Pièce rapportée de chauffage selon l'une quelconque des revendications précédentes, **caractérisée en ce que** la base de récipient (2), à l'endroit où elle est recouverte avec la tôle (3), est plane.

7. Pièce rapportée de chauffage selon l'une quelconque des revendications précédentes, **caractérisée en ce que** la tôle (3) ne s'étend pas jusqu'au bord de la base de récipient (2) .

8. Pièce rapportée de chauffage selon l'une quelconque des revendications précédentes, **caractérisée en ce que** la tôle (3) présente un trou (5) au milieu de la base de récipient (2) .

9. Pièce rapportée de chauffage selon la revendication 8, **caractérisée en ce que** le trou (5) est de forme circulaire.

10. Pièce rapportée de chauffage selon l'une quelconque des revendications précédentes, **caractérisée en ce que** le corps de chauffage (4) est fixé au côté inférieur de la tôle (3).

11. Pièce rapportée de chauffage selon l'une quelconque des revendications précédentes, **caractérisée en ce que** la tôle (3) représente le moyen pour le couplage thermique du limiteur ou du régulateur de température au corps de chauffage (4) .

12. Pièce rapportée de chauffage selon la revendication 11, **caractérisée en ce que** la tôle (3) présente les moyens (6) pour l'application du limiteur ou du régulateur de température.

13. Pièce rapportée de chauffage selon l'une quelconque des revendications précédentes, **caractérisée en ce qu'**on prévoit, sur le côté inférieur de la base de récipient (2), l'une à côté de l'autre, une première tôle (3) comprenant des moyens pour l'application du limiteur ou du régulateur de température et au moins une tôle supplémentaire (3b) pour le couplage thermique du limiteur ou du régulateur de température au corps de chauffage (4).

14. Pièce rapportée de chauffage selon l'une quelconque des revendications précédentes, **caractérisée en ce que** les tôles supplémentaires (3b) sont reliées par une ou plusieurs entretoises (7) à la première tôle (3), dont la largeur - le cas échéant à leurs endroits les plus étroits - prise ensemble pour la tôle supplémentaire respective (3b) est petite par rapport à la périphérie de la tôle supplémentaire correspondante (3b) qui procède au couplage thermique du limiteur ou du régulateur de température au corps de chauffage (4).

15. Pièce rapportée de chauffage selon l'une quelconque des revendications précédentes, **caractérisée en ce que** les broches (6) faisant saillie vers le bas sont des broches creuses.

16. Pièce rapportée de chauffage selon la revendication 15, **caractérisée en ce que** les broches (6) sont réalisées par emboutissage de la tôle (3).

17. Pièce rapportée de chauffage selon la revendication 15 ou 16, **caractérisée en ce que** l'épaisseur de la tôle (3), dans une zone (8) qui entoure directement les broches (6), est réduite par rapport à l'épaisseur de la tôle restante (3).

18. Pièce rapportée de chauffage selon la revendication 17, **caractérisée en ce que** la tôle (3) présente, dans ses zones (8) d'épaisseur réduite, des nervures (9) qui s'étendent en direction radiale par rapport à la broche respective (6) .

19. Pièce rapportée de chauffage selon l'une quelconque des revendications précédentes, **caractérisée en ce que** l'on réalise des pattes (11, 11b) à partir de la tôle (3).

20. Pièce rapportée de chauffage selon l'une quelconque des revendications précédentes, **caractérisée en ce que** la tôle (3) est reliée par brasage à la base de récipient (2).

21. Pièce rapportée de chauffage selon l'une quelconque des revendications 1 à 19, **caractérisée en ce que** la tôle (3) est collée à la base de récipient (2) via un adhésif conducteur suffisamment résistant à la température.

22. Pièce rapportée de chauffage selon l'une quelconque des revendications précédentes, **caractérisée en ce que** le corps de chauffage tubulaire (4) est aplati par façonnement et est relié par brasage, avec son côté aplati, au côté inférieur de la base de récipient (2) ou de la tôle (3).

23. Pièce rapportée de chauffage selon l'une quelconque des revendications précédentes, **caractérisée en ce que** le corps de chauffage (4) est disposé à distance du bord de la base de récipient (2) .

24. Pièce rapportée de chauffage selon l'une quelconque des revendications précédentes, **caractérisée en ce que** la base de récipient (2) possède une épaisseur maximale de 0,5 mm, de préférence une épaisseur maximale de 0,4 mm.

25. Pièce rapportée de chauffage selon l'une quelconque des revendications précédentes en liaison avec la revendication 8 ou 9, **caractérisée en ce que** la base de récipient (2) possède, en son milieu, une élévation ou un renfoncement (12) de préférence de forme circulaire, qui forme une liaison mécanique avec le bord du trou (5) pratiqué dans la tôle (3), dont la ccnfiguration épouse celle du contour de l'élévation ou du renfoncement.
